# EUROPÄISCHE PATENTANMELDUNG

(11) **EP 4 008 942 A1**
(43) Veröffentlichungstag der Anmeldung: **08.06.2022**
(21) Anmeldenummer: 21200739.7
(22) Anmeldetag: 04.10.2021
(51) Int. Cl.: F16K 37/00

(54) **VERFAHREN UND VORRICHTUNG ZUR ERMITTLUNG EINES ZUSTANDS EINES VENTILS**

(30) Priorität: 03.12.2020 DE 102020132209
(71) Anmelder: Gemü Gebr. Müller Apparatebau GmbH & Co. Kommanditgesellschaft, 74653 Ingelfingen (DE)
(72) Erfinder: Müller, Gert, 74653 Künzelsau (DE); Ellinger, Dennis, 74653 Ingelfingen (DE); Bay, Karlheinz, 70195 Stuttgart (DE); Goecke, David, 70178 Stuttgart (DE)
(74) Vertreter: DREISS Patentanwälte PartG mbB

(57) **Zusammenfassung**

Es wird ein Verfahren bereitgestellt, umfassend: Empfangen oder Ermitteln (102) wenigstens eines Tonsignals (T), welches eine akustische Tonaufnahme eines Öffnungs- und/oder Schließvorgangs eines Ventils umfasst; Ermitteln (110, 120) einer Mehrzahl von voneinander unterschiedlichen Repräsentationen (R1, R2) zumindest eines Teils von mit dem Tonsignal (T) bereitgestellten Informationen; und Ermitteln (140) eines Zustands (Z) aus einer Mehrzahl von Zuständen des Ventils in Abhängigkeit von der Mehrzahl von Repräsentationen (R1, R2).

## Beschreibung

Diese Beschreibung betrifft Fortschritte bei der Ermittlung von Zuständen eines Ventils.

Das menschliche Gehör ist grundsätzlich gut geeignet, Fehler, die sich in Schallwellen niederschlagen, zu analysieren. Wartungspersonal vertraut deshalb bei den Überprüfungen einer fluidtechnischen Anlage oft seinem Gehör. Defekte können so leicht erkannt werden.

Ein Verschleiß eines Ventils und insbesondere die Art des Verschleißes ist jedoch bereits aufgrund der wachsenden Ventilvielfalt für das Wartungspersonal eher schlecht durch die eigene akustische Wahrnehmung zu erkennen.

Ein erster Aspekt der Beschreibung betrifft ein Verfahren, welches umfasst: Empfangen oder Ermitteln wenigstens eines Tonsignals, welches eine akustische Tonaufnahme eines Öffnungs- und/oder Schließvorgangs eines Ventils umfasst; Ermitteln einer Mehrzahl von voneinander unterschiedlichen Repräsentationen zumindest eines Teils von mit dem Tonsignal bereitgestellten Informationen; und Ermitteln eines Zustands aus einer Mehrzahl von Zuständen des Ventils in Abhängigkeit von der Mehrzahl von Repräsentationen.

So kann auf einfache Weise der Zustand des Ventils bestimmt werden, ohne dass unmittelbare Eingriffe oder eine Demontage des Ventils erfolgen müssen. Das Wartungspersonal hat somit jederzeit die Möglichkeit, festzustellen, ob das Ventil voll funktionsfähig ist oder bald einer Wartung zugeführt werden sollte. Weitere Anwendungen umfassen eine zentrale datentechnische Sammlung der ermittelten Zustände, um Predictive Maintenance durchzuführen und um beispielsweise Rückschlüsse auf Fehlerhäufigkeiten bei einzelnen Ventiltypen im Feld zu erkennen.

Vorteilhaft kann das vorgeschlagene Verfahren beispielsweise auf verfügbaren mobilen Endgeräten ausgeführt bzw. angeboten werden, wodurch sich eine unkomplizierte und kostengünstige Anwendung der Ermittlung des Ventilzustands ergibt.

Ein vorteilhaftes Beispiel zeichnet sich dadurch aus, dass das Verfahren weitergehend umfasst: Ermitteln einer Mehrzahl von bandpassgefilterten Signalen mittels eines jeweiligen einen Durchlassbereich aufweisenden Bandpasses in Abhängigkeit von dem Tonsignal; wobei die Mehrzahl von voneinander unterschiedlichen Repräsentationen in Abhängigkeit von einem jeweiligen der Mehrzahl von bandpassgefilterten Signalen ermittelt wird.

Vorteilhaft werden aus dem Tonsignal eine Mehrzahl von voneinander unterschiedlichen Signale extrahiert, die aufgrund der unterschiedlichen Informationen beispielsweise durch einen Vergleich Rückschlüsse auf den Zustand des Ventils zulassen.

Gemäß einem vorteilhaften Beispiel umfasst wenigstens einer der Mehrzahl der Durchlassbereiche ein Frequenzband gemäß der Barkskala.

Hörbare Unterschiede zwischen funktionierenden und verschlissenen Ventilen könne über eine Analyse über die Durchlassbereiche gemäß der Barkskala erreicht werden. Damit werden psychoakustische Parameter berücksichtigt, die analog zum menschlichen Gehör die voran genannten Unterschiede zwischen den Zuständen der Ventile erfassen können.

Ein vorteilhaftes Beispiel zeichnet sich dadurch aus, dass das Verfahren weitergehend umfasst: Ermitteln einer Mehrzahl von Einhüllenden in Abhängigkeit von einem jeweiligen der bandpassgefilterten Signale; wobei die Mehrzahl von voneinander unterschiedlichen Repräsentationen in Abhängigkeit von einer jeweiligen der Mehrzahl von Einhüllenden ermittelt werden.

Durch die Ermittlung der Einhüllenden treten die charakteristische Geräusche des Öffnungs- und oder Schließvorgangs aus dem bandpassgefilterten Signal für die Ermittlung des Zustandes besser hervor.

In einem vorteilhaften Beispiel entspricht die Mehrzahl von voneinander unterschiedlichen Repräsentationen einer Mehrzahl von jeweiligen Amplitudenspektren des einhüllenden Signals bzw. der Einhüllenden.

Vorteilhaft geben die voneinander unterschiedlichen Amplitudenspektren charakteristische Eigenschaften des Zustands des Ventils wieder.

Ein vorteilhaftes Beispiel zeichnet sich dadurch aus, dass das Verfahren weitergehend umfasst: Ermitteln einer Mehrzahl von charakteristischen Parametern in Abhängigkeit von einer jeweiligen der Mehrzahl von Repräsentationen; und Ermitteln des Zustands durch einen Vergleich der Mehrzahl von charakteristischen Parametern, insbesondere durch einen paarweisen Vergleich miteinander.

Vorteilhaft kann durch einfache Rechenoperationen der Zustand des Ventils ermittelt werden.

Ein vorteilhaftes Beispiel zeichnet sich dadurch aus, dass das Verfahren weitergehend umfasst: Ermitteln einer Mehrzahl von Abweichungen, insbesondere einer Mehrzahl von mittleren quadratischen Abweichungen, in Abhängigkeit von der jeweiligen Repräsentation und von einer jeweiligen zugeordneten vorab bekannten Referenz-Repräsentation; Ermitteln einer Verknüpfung in Abhängigkeit von der Mehrzahl von Abweichungen; und Ermitteln des Zustandes des Ventils in Abhängigkeit von einem Vergleich der Verknüpfung mit wenigstens einem vorab bekannten Wertebereich.

Vorteilhaft werden durch die Mehrzahl von Referenz-Repräsentationen Vergleichsdaten bereitgestellt werden, die vorab für den jeweiligen Ventiltyp ermittelt werden. Damit steht eine Referenz bereit, die einen zugeordneten Zustand repräsentiert. Die ermittelten Abweichungen stellen damit Abweichungen von der Referenz dar und können vorteilhaft bei einer erhöhten Abweichung einen anderen Zustand anzeigen als den, der mit den vorab bekannten Referenz-Repräsentationen verknüpft ist.

In einem vorteilhaften Beispiel repräsentiert die vorab bekannte Mehrzahl von Referenz-Repräsentationen einen verschleiß- und fehlerfreien Zustand eines Ventiltyps. Vorteilhaft können damit Fehlerbilder allein durch eine genügende Abweichung erkannt werden. Insbesondere können Fehlerbilder erkannt werden, die zuvor nicht bekannt oder nicht hinreichend oft vorkommen, um in die Zustandsermittlung explizit mittels Referenz-Repräsentationen einbezogen zu werden. Sowohl Speicher- als auch Recheneffizienz werden somit bei gleichzeitig erfolgreicher Analyse gesteigert.

Ein vorteilhaftes Beispiel zeichnet sich dadurch aus, dass das Verfahren weitergehend umfasst: Ermitteln einer Analysekonfiguration, insbesondere umfassend die Mehrzahl von Durchlassbereichen; wobei die Ermittlung der Mehrzahl von voneinander unterschiedlichen Repräsentationen und/oder die Ermittlung des Zustandes unter anderem in Abhängigkeit von der ermittelten Analysekonfiguration erfolgt.

Vorteilhaft wird durch die Analysekonfiguration ermöglicht, dass die Ermittlung des Zustands dynamisch an die jeweilige Analysesituation angepasst werden kann.

Ein vorteilhaftes Beispiel zeichnet sich dadurch aus, dass das Verfahren weitergehend umfasst: Ermitteln eines Typs des Ventils in Abhängigkeit von einer über eine Benutzerschnittstelle erhaltenen Benutzereingabe und/oder in Abhängigkeit von einem gescannten Barcode und/oder in Abhängigkeit von einer gelesenem RFID-Etikett; wobei die Ermittlung der Analysekonfiguration, insbesondere der Mehrzahl von Durchlassbereichen, in Abhängigkeit von dem Typ des Ventils erfolgt.

Berücksichtigt man beispielsweise unterschiedliche Durchlassbereiche, so wird es möglich, dass die Analyse auf einfache Art und Weise an unterschiedliche Ventiltypen angepasst werden kann.

Ein vorteilhaftes Beispiel zeichnet sich dadurch aus, dass das Verfahren weitergehend umfasst: Ermitteln eines Betriebszustandes zu Beginn des Öffnungs- und/oder Schließvorgangs in Abhängigkeit von dem Tonsignal; wobei die Ermittlung der Analysekonfiguration in Abhängigkeit von dem ermittelten Betriebszustand erfolgt.

Vorteilhaft kann beispielsweise anhand des Tonsignals ermittelt werden, ob vor dem Öffnungs- und/oder Schließvorgang ein Fluid durch das Ventil fließt. Folglich kann darauf geschlossen werden, ob das Tonsignal anschließend einen Öffnungsvorgang oder einen Schließvorgang des Ventils repräsentiert. Entsprechend kann die Analyse zielgerichtet anhand der jeweiligen Analysekonfiguration für das Öffnen oder Schließen durchgeführt werden.

Ein weiterer Aspekt dieser Beschreibung betrifft eine Vorrichtung. Die Vorrichtung umfasst: Mittel zum Empfangen oder Ermitteln wenigstens eines Tonsignals, welches eine akustische Tonaufnahme eines Öffnungs- und/oder Schließvorgangs eines Ventils umfasst; Mittel zum Ermitteln einer Mehrzahl von voneinander unterschiedlichen Repräsentationen zumindest eines Teils von mit dem Tonsignal bereitgestellten Informationen; und Mittel zum Ermitteln eines Zustands aus einer Mehrzahl von Zuständen des Ventils in Abhängigkeit von der Mehrzahl von Repräsentationen.

Ein dritter Aspekt der Beschreibung betrifft ein System zur Ermittlung eines Zustands eines Ventils, wobei das System umfasst: das Ventil; und die Vorrichtung gemäß dem zweiten Aspekt.

In der Zeichnung zeigen:
- Figuren 1-3 und 6: jeweils ein schematisches Blockdiagramm;
- Figur 4: zwei Repräsentationen eines Tonsignals, welches eine Tonaufnahme eines defekten Ventils umfasst;
- Figur 5: zwei Repräsentationen eines Tonsignals, welches eine Tonaufnahme eines Ventils in einem fehlerfreien Zustand umfasst;
- Figur 7: ein schematisches Ablaufdiagramm zur Ermittlung eines Zustands eines Ventils;
- Figuren 8 bis 10: jeweils ein System umfassend ein Ventil und eine Vorrichtung zur Ermittlung des Zustands des Ventils;
- Figur 11: eine Aufteilung von Komponenten auf die Entitäten der Ausführungsbeispiele der Figuren 8 bis 10.

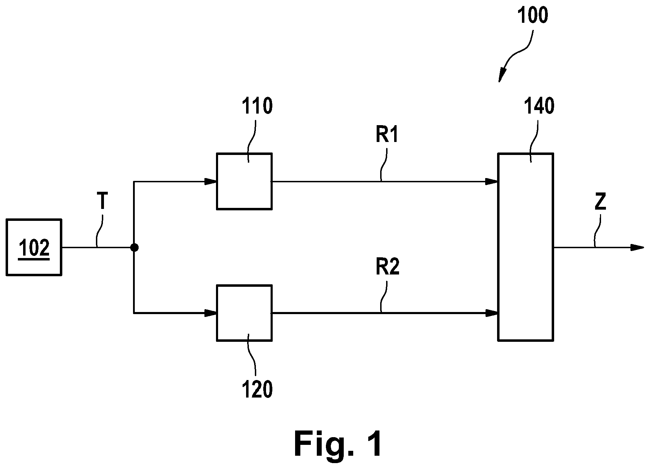

Figur 1 zeigt in einem schematischen Blockdiagramm ein Verfahren zur Ermittlung eines Zustandes eines Ventils.

Gemäß einer Einheit 102 wird wenigstens ein Tonsignals T empfangen oder ermittelt, welches eine akustische Tonaufnahme eines Öffnungs- und/oder Schließvorgangs eines Ventils zur Stellung eines Prozessfluids umfasst. Die Einheit 102 kann beispielsweise ein Mikrofon sein, dass die Schallwellen in elektrische Signale, also das Tonsignal T umwandelt. In einem anderen Beispiel ist die Einheit 102 eine Datenschnittstelle, um das Tonsignal T von einer anderen Einheit, die das Tonsignal mittels eines dortigen Mikrofons aufgezeichnet hat oder aufzeichnet, zu empfangen.

Jeweilige Ermittlungseinheiten 110, 120 sind dazu eingerichtet, eine Mehrzahl von voneinander unterschiedlichen Repräsentationen R1, R2 zumindest eines Teils von mit dem Tonsignal T bereitgestellten Informationen zu ermitteln. Die Repräsentationen R1, R2 unterscheiden sich somit voneinander. Beispielsweise liegen unterschiedliche Verarbeitungsschritte zugrunde. Als Ausgangsbasis für die Ermittlungseinheiten 110, 120 dient jedoch das gleiche Tonsignal T oder das gleiche daraus abgeleitete Signal.

Eine Ermittlungseinheit 140 ist eingerichtet, um einen Zustand Z aus einer Mehrzahl von möglichen Zuständen des Ventils in Abhängigkeit von der Mehrzahl von Repräsentationen R1, R2 zu ermitteln. So können beispielsweise zwei mögliche Zustände 'fehlerfrei', 'fehlerbehaftet' ausreichen. In anderen Beispielen können mehr als zwei mögliche Zustände zur Verfügung stehen.

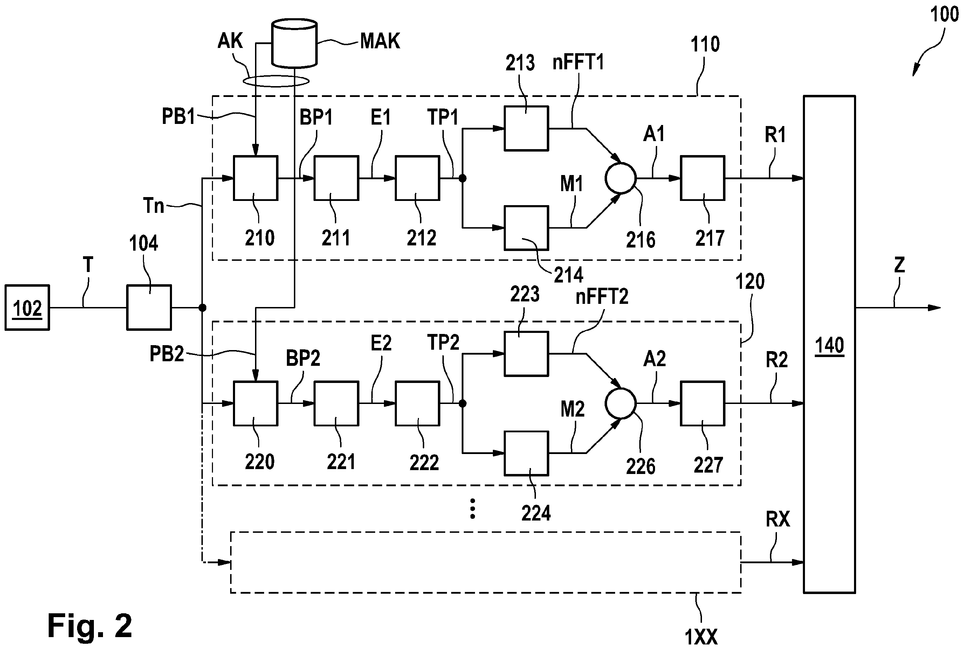

Figur 2 zeigt ein weiteres schematisches Blockdiagramm in Anlehnung an Figur 1. Das Tonsignal T wird mittels einer Normalisierungseinheit 104 normalisiert, so dass das Tonsignal Tn für die nachfolgenden Bearbeitungsschritte innerhalb eines vorgegebenen Amplitudenbereichs liegt.

Ermittlungseinheiten 210, 220 führen ein Ermitteln einer Mehrzahl von bandpassgefilterten Signalen BP1, BP2 mittels eines jeweiligen einen Durchlassbereich PB1, PB2 aufweisenden Bandpasses in Abhängigkeit von dem Tonsignal Tp bzw. T durch.

Die Mehrzahl von voneinander unterschiedlichen Repräsentationen R1, R2 wird also in Abhängigkeit von einem jeweiligen der Mehrzahl von bandpassgefilterten Signalen BP1, BP2 ermittelt.

Die Durchlassbereiche PB1 und PB2 sind beispielsweise Teil einer Analysekonfiguration AK und sind auf einem nichtflüchtigen Speicher MAK abgelegt.

Wenigstens einer der Mehrzahl der Durchlassbereiche PB1, PB2 umfasst ein Frequenzband gemäß der Barkskala bzw. entspricht diesem, insbesondere stimmt die untere Frequenz des jeweiligen Durchlassbereichs mit einer Barkfrequenz überein.

Ermittlungseinheiten 211, 221 ermitteln eine Mehrzahl von Einhüllenden E1, E2 in Abhängigkeit von einem jeweiligen der bandpassgefilterten Signale BP1, BP2. Die Einhüllende E1, E2 wird in Abhängigkeit von einzelnen Betragswerten einer Hilbert-Transformation aus dem jeweils zugeordneten Signal BP1, BP2 ermittelt. Um die Daten zu reduzieren kann optional eine Unterabtastung der jeweiligen Einhüllenden E1, E2 durchgeführt werden. Die Mehrzahl von voneinander unterschiedlichen Repräsentationen R1, R2 werden folglich in Abhängigkeit von einer jeweiligen zugeordneten der Mehrzahl von Einhüllenden E1, E2 ermittelt.

Eine jeweilige der Mehrzahl von voneinander unterschiedlichen Repräsentationen R1, R2 ist ein Amplitudenspektrum, welches insbesondere in Abhängigkeit von der zugeordneten Einhüllenden E1, E2 ermittelt wird. Selbstverständlich sind auch andere Arten von Repräsentationen denkbar, die bevorzugt auf einem in den Frequenzbereich transformierten Signal beruhen.

Mittels einer Ermittlungseinheit 212, 222 wird ein jeweiliges in den Frequenzbereich transformiertes Signal FFT1, FFT2 in Abhängigkeit von der jeweiligen Einhüllenden E1, E2 ermittelt. Mittels einer Ermittlungseinheit 213, 223 wird ein weiteres Signal nFFT1, nFFT2 in Abhängigkeit von dem jeweiligen Signal FFT1, FFt2 ermittelt. Die Ermittlungseinheit 212, 222 umfasst beispielsweise eine Fast Fourier Transformation, kurz FFT.

Insbesondere, wenn die Ermittlungseinheit 212, 222 nach der Welch-Methode oder der Barlett-Methode das Signal FFT1, FFT2 bestimmt, dann ermittelt die Ermittlungseinheit 213, 223 die zweite Wurzel aus dem jeweiligen Signal FFT1, FFT2, womit die einzelnen Werte der Signale nFFT1, nFFT2 positiv sind. Eine Ermittlungseinheit 214, 224 wendet einen Tiefpassfilter, beispielsweise mit einer Cut-Off-Frequenz zwischen 800 und 1200 Hz, auf die Einhüllende E1, E2 an. Für das sich jeweils ergebende Signal TP1, TP2 ermittelt die Ermittlungseinheit 215, 225 einen jeweiligen Mittelwert M1, M2.

An einer Divisionsstelle 216, 226 wird das jeweilige Signal nFFT1, nFFT2 durch den zugeordneten Mittelwert M1, M2 geteilt, womit sich ein Amplitudenspektrum A1, A2 ergibt. Eine Ermittlungseinheit 217, 227 ermittelt die Repräsentation R1, R2, welche einen Ausschnitt aus dem Amplitudenspektrum A1, A2 repräsentiert. Beispielsweise umfasst der jeweilige Ausschnitt die Amplituden oberhalb eines vorab ermittelten Frequenzwerts.

Selbstverständlich können neben den Ermittlungseinheiten 110 und 120 noch weitere Ermittlungseinheit 1XX vorgesehen sein, welche eine jeweilige Repräsentation RX ermitteln und an die Ermittlungseinheit 140 übergeben. Die Repräsentation R1, R2 stellt also ein jeweiliges Amplitudenspektrum dar, welches auch als Modulationsgrad bezeichenbar ist.

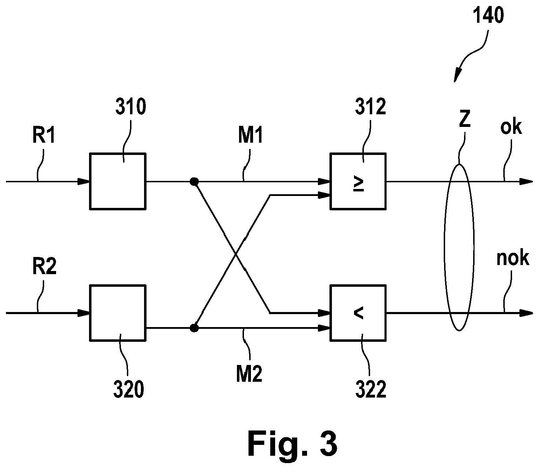

Figur 3 zeigt eine beispielhafte Ausführungsform der Ermittlungseinheit 140 aus den vorangehenden Figuren in einem schematischen Blockdiagramm. Gemäß der Ermittlungseinheiten 310, 320 wird eine Mehrzahl von charakteristischen Parametern M1, M2 in Abhängigkeit von einer jeweiligen der Mehrzahl von Repräsentationen R1, R2 ermittelt. Gemäß Ermittlungseinheiten 312, 322 wird der Zustand Z durch einen Vergleich der Mehrzahl von charakteristischen Parametern M1, M2, insbesondere durch einen paarweisen Vergleich miteinander, ermittelt.

Beispielsweise ist der charakteristische Parameter M1, M2 ein jeweiliges Maximum der zugeordneten Repräsentation R1, R2. Ist der Parameter M1 größer als der oder gleich dem Parameter M2, so wird als Ergebnis ok ausgegeben, womit der Zustand Z ein einwandfreies Funktionieren des Ventils indiziert. Ist hingegen der Parameter M1 kleiner als der Parameter M2, so wird als Ergebnis nok ausgegeben, womit der Zustand Z ein nicht einwandfreies Funktionieren des Ventils indiziert.

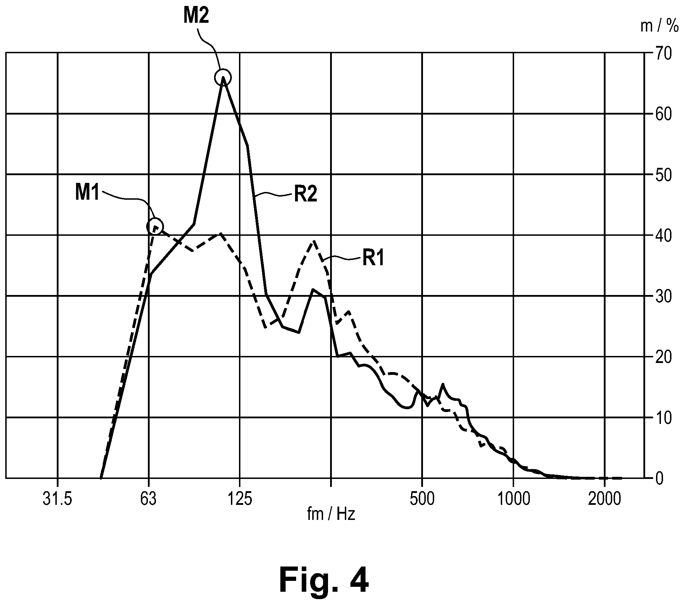

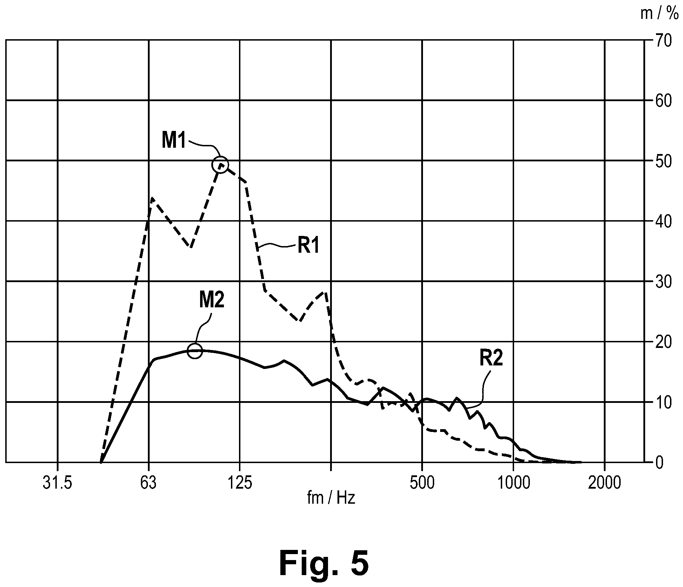

Die Figuren 4 und 5 zeigen jeweils zwei Repräsentationen R1 und R2 über der Frequenz aufgetragen. Vorliegend ist die Repräsentation R1 mit einem Bandpass gemäß Bark-Index 18 assoziiert. Die Repräsentation R2 ist mit einem Bandpass gemäß Bark-Index 19 assoziiert.

Die in Figur 4 gezeigten Repräsentationen R1 und R2 basieren auf einer Tonaufnahme eines defekten Ventils. Gemäß dem Verfahren der Figur 3 wird der defekte Zustand des Ventils dadurch erkannt, dass der Parameter M2 größer ist als der Parameter M1. In anderen Worten ist das Maximum der Repräsentation R2 größer als das Maximum der Repräsentation R1.

In der Figur 5 hingegen sind Repräsentation R1 und R2 gezeigt, welche auf einer Tonaufnahme eines einwandfrei funktionierenden Ventils basieren. Gemäß dem Verfahren der Figur 3 wird der Zustand des Ventils als »Das Ventil ist in Ordnung« ermittelt, da das Maximum der zweiten Repräsentation R2 in Form des Parameters M2 kleiner ist als das Maximum der ersten Repräsentation in Form des Parameters M1.

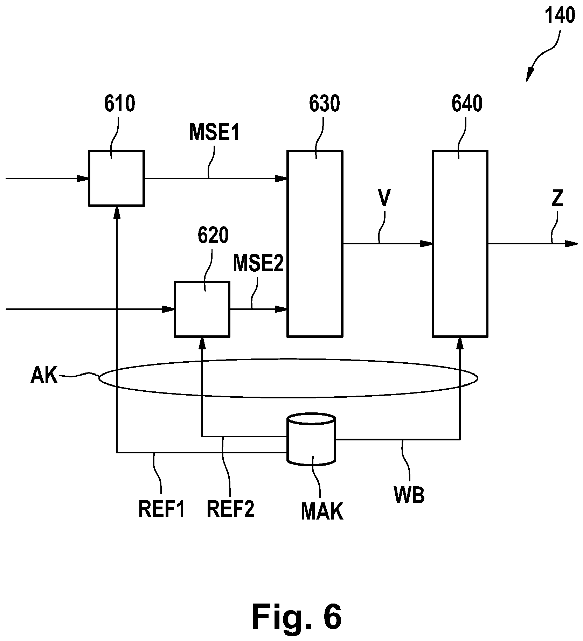

Figur 6 zeigt eine weitere Ausführungsform der Ermittlungseinheit 140 als schematisches Blockdiagramm.

Die Mehrzahl von Repräsentationen R1, R2 werden miteinander verglichen. Ermittlungseinheiten 610, 620 ermitteln hierzu eine Mehrzahl von Abweichungen MSE1, MSE2, insbesondere eine Mehrzahl von mittleren quadratischen Abweichungen, in Abhängigkeit von der jeweiligen Repräsentation R1, R2 und von einer jeweiligen zugeordneten vorab bekannten Referenz-Repräsentation REF1, REF2, welche beispielsweise Teil der Analysekonfiguration AK ist.

Eine Ermittlungseinheit 630 ermittelt einer Verknüpfung V in Abhängigkeit von der Mehrzahl von Abweichungen MSE1, MSE2, insbesondere werden die Abweichungen MSE1 und MSE2 durch Multiplikation oder Addition miteinander verknüpft.

Eine Ermittlungseinheit 640 ermittelt den Zustand Z des Ventils in Abhängigkeit von einem Vergleich der Verknüpfung V mit wenigstens einem vorab bekannten Wertebereich WB, der beispielsweise Teil der Analysekonfiguration ist. Selbstverständlich können mehrere Wertebereiche zur Verfügung stehen, die einen Degradierungsgrad des Ventils anzeigen. So kann rechtzeitig vor einem Versagen des Ventils eine Wartung durchgeführt werden.

Die vorab bekannte Mehrzahl von Referenz-Repräsentationen REF1, REF2 repräsentieren einen verschleiß- und fehlerfreien Zustand des jeweiligen Ventiltyps.

Der Ventiltyp ist in dieser Beschreibung dahingehend zu verstehen, dass eine Paarung von Ventilkörper, Absperrmittel und Antrieb einen Ventiltyp charakterisiert. Die vorgenannten Bauteile bestimmen den hörbaren Gesamteindruck, der mittels der hier beschriebenen Verfahren analysiert wird.

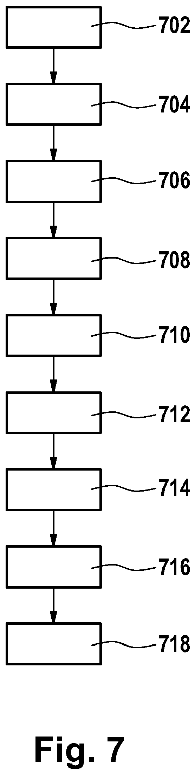

Figur 7 zeigt ein schematisches Ablaufdiagramm zum Betreiben einer Vorrichtung zur Ermittlung des Zustandes des Ventils. In einem Schritt 702 werden dem Benutzer über eine Benutzerschnittstelle eine Anzahl von Ventiltypen angeboten, unter denen der Benutzer den Ventiltyp auswählen soll, dem das zu untersuchende Ventil entspricht. In einem Schritt 704 wird die Auswahl des Benutzers von der Benutzerschnittstelle empfangen.

Selbstverständlich kann die Ermittlung des Ventiltyps auch andersartig erfolgen. Je nach Ausführungsbeispiel kann der Ventiltyp festgelegt sein, wenn das Verfahren stets nur für einen Ventiltyp durchgeführt wird, was beispielsweise im Falle einer fest mit dem Ventil verbauten Einheit, die das Verfahren ausführt einschlägig ist. Auch kann ein RFID-Etikett ausgelesen werden, um den Ventiltyp zu bestimmen. Auch kann ein optischer fassbarer Code wie beispielsweise ein Barcode über eine Kamera erfasst werden, um den Ventiltyp zu bestimmen.

Das Ermitteln eines Typs des Ventils in Abhängigkeit von einer über eine Benutzerschnittstelle erhaltenen Benutzereingabe und/oder in Abhängigkeit von einem gescannten Barcode und/oder in Abhängigkeit von einer gelesenem RFID-Etikett ermöglicht, dass die Ermittlung der Analysekonfiguration, insbesondere der Mehrzahl von Durchlassbereichen, in Abhängigkeit von dem Typ des Ventils erfolgt.

In einem Schritt 706 wird, begonnen das Tonsignal aufzuzeichnen. In einem Schritt 708 wird der Benutzer aufgefordert, das Ventil anzusteuern. In einem Schritt 710 wird benutzerseitig oder vorrichtungsseitig die Aufnahme des Tonsignals beendet. In einem Ausführungsbeispiel wird die Aufnahme des Tonsignals nicht beendet, sondern dauerhaft fortgesetzt.

In einem Schritt 712 wird in Abhängigkeit von dem Tonsignal ein Betriebszustand zu Beginn des Öffnungs- bzw. Schließvorgangs des Ventils ermittelt.

In einem Schritt 714 wird die Analysekonfiguration ermittelt, beispielsweise in Abhängigkeit von dem Betriebszustand und/oder in Abhängigkeit von dem ausgewählten Ventiltyp.

Das Ermitteln 712 des Betriebszustandes zu Beginn des Öffnungs- und/oder Schließvorgangs in Abhängigkeit von dem Tonsignal ermöglicht beispielsweise, dass die Ermittlung 714 der Analysekonfiguration AK in Abhängigkeit von dem ermittelten Betriebszustand erfolgt.

Das Ermitteln 714 der Analysekonfiguration, insbesondere umfassend die Mehrzahl von Durchlassbereichen PB1, PB2 ermöglicht, dass die Ermittlung der Mehrzahl von voneinander unterschiedlichen Repräsentationen R1, R2 und/oder die Ermittlung 140 des Zustandes Z unter anderem in Abhängigkeit von der ermittelten Analysekonfiguration erfolgt.

Im Schritt 716 wird die Analyse durchgeführt, dies kann entweder auf der Vorrichtung selbst oder in einer entfernt angeordneten Einheit stattfinden. Nach Durchführung der Analyse wird in einem Schritt 718 der Zustand des Ventils dem Benutzer über die Benutzerschnittstelle bereitgestellt.

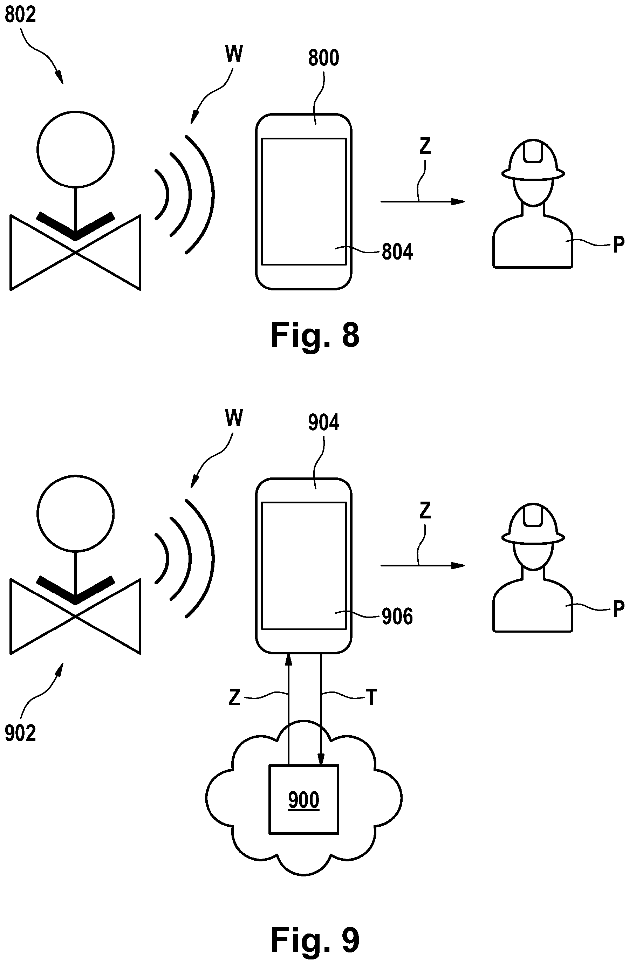

Figur 8 zeigt ein Anwendungsbeispiel. Von einem Ventil 802, welches beispielhaft als Membranventil dargestellt ist, gehen im Betrieb Schallwellen W aus. Ein Endgerät 800, das beispielsweise als Tablet oder Mobiltelefon ausgebildet ist, empfängt die Schallwellen W und ermittelt den Zustand Z anhand der voran genannten Verfahrensschritte. Über eine Benutzerschnittstelle 804 des Endgeräts 800 wird der Zustand Z dem Benutzer P angezeigt.

Figur 9 zeigt in Abwandlung zum Anwendungsbeispiel der Figur 8, dass ein Endgerät 904 das Tonsignal T in Abhängigkeit von den Schallwellen W ermittelt und über eine Daten-Schnittstelle an eine entfernt angeordnete Berechnungseinheit bzw. Vorrichtung 900 übermittelt. Die Analysekonfiguration wird in nicht gezeigter Form zumindest teilweise an die Berechnungseinheit 900 übermittelt. Die Berechnungseinheit 900 ermittelt gemäß den voran erläuterten Verfahren den Zustand Z, der, nach Übermittlung an das Endgerät 904, über eine Benutzerschnittstelle 906 dem Benutzer P bereitgestellt wird.

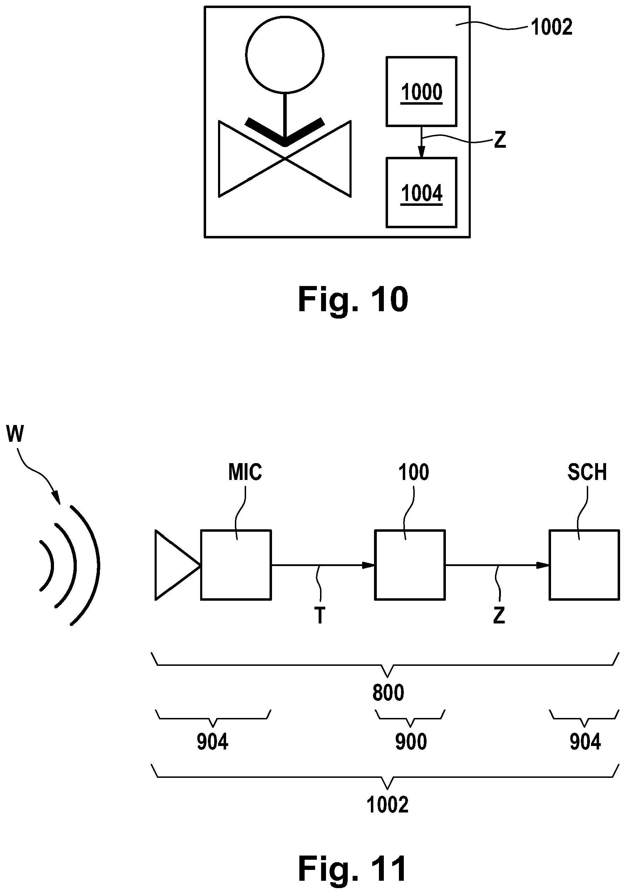

Figur 10 zeigt in einem weiteren Anwendungsbeispiel, dass eine Vorrichtung 1000 zur Ermittlung des Zustands Z Teil eines Ventils 1002 ist. Beispielsweise ist die Vorrichtung 1000 unmittelbar mit dem Gehäuse des Ventils 1002 verbunden. Der Zustand Z wird über eine entsprechende Benutzerschnittstelle 1004, die beispielsweise als Leuchtdiode ausgebildet ist, signalisiert. Alternativ oder zusätzlich kann eine nicht gezeigte Datenschnittstelle vorgesehen werden, um den Zustand Z an ein Endgerät oder einen zentralen Netzwerkknoten zu übermitteln.

Figur 11 zeigt eine Aufteilung der einzelnen Komponenten auf die Entitäten der Ausführungsbeispiele der Figuren 8, 9 und 10. Ein Mikrofon MIC, die Vorrichtung 100 sowie eine Schnittstelle SCH, die je nach Ausführungsbeispiel als Benutzerschnittstelle und/oder Netzwerkschnittstelle ausgebildet sein kann, sind im Ausführungsbeispiel der Figur 8 auf de Endgerät 800 und im Ausführungsbeispiel der Figur 9 auf dem Endgerät 904 geordnet. Im Ausführungsbeispiel der Figur 10 umfasst das Ventil 1002 das Mikrofon MIC, die Vorrichtung 100 und die Schnittstelle SCH.

## Patentansprüche

1. Ein Verfahren umfassend:
Empfangen oder Ermitteln (102) wenigstens eines Tonsignals (T), welches eine akustische Tonaufnahme eines Öffnungs- und/oder Schließvorgangs eines Ventils (802; 902; 1002) umfasst;
Ermitteln (110, 120) einer Mehrzahl von voneinander unterschiedlichen Repräsentationen (R1, R2) zumindest eines Teils von mit dem Tonsignal (T) bereitgestellten Informationen;
Ermitteln (140) eines Zustands (Z) aus einer Mehrzahl von Zuständen des Ventils (802; 902; 1002) in Abhängigkeit von der Mehrzahl von Repräsentationen (R1, R2).

2. Das Verfahren gemäß dem Anspruch 1 umfassend:
Ermitteln (210, 220) einer Mehrzahl von bandpassgefilterten Signalen (BP1, BP2) mittels eines jeweiligen einen Durchlassbereich (PB1, PB2) aufweisenden Bandpasses in Abhängigkeit von dem Tonsignal (T);
wobei die Mehrzahl von voneinander unterschiedlichen Repräsentationen (R1, R2) in Abhängigkeit von einem jeweiligen der Mehrzahl von bandpassgefilterten Signalen (BP1, BP2) ermittelt wird.

3. Das Verfahren gemäß dem Anspruch 2, wobei wenigstens einer der Mehrzahl der Durchlassbereiche (PB1, PB2) ein Frequenzband gemäß der Barkskala umfasst.

4. Das Verfahren gemäß dem Anspruch 2 und 3 umfassend:
Ermitteln (211, 221) einer Mehrzahl von Einhüllenden (E1, E2) in Abhängigkeit von einem jeweiligen der bandpassgefilterten Signale (BP1, BP2);
wobei die Mehrzahl von voneinander unterschiedlichen Repräsentationen (R1, R2) in Abhängigkeit von einer jeweiligen der Mehrzahl von Einhüllenden (E1, E2) ermittelt werden.

5. Das Verfahren gemäß einem der vorigen Ansprüche, wobei die Mehrzahl von voneinander unterschiedlichen Repräsentationen (R1, R2) eine Mehrzahl von jeweiligen Amplitudenspektren ist.

6. Das Verfahren gemäß einem der vorigen Ansprüche, wobei die Ermittlung des Zustands (Z) umfasst:
Ermitteln (310, 320) einer Mehrzahl von charakteristischen Parametern (M1, M2) in Abhängigkeit von einer jeweiligen der Mehrzahl von Repräsentationen (R1, R2); und
Ermitteln (312, 322) des Zustands (Z) durch einen Vergleich der Mehrzahl von charakteristischen Parametern (M1, M2), insbesondere durch einen paarweisen Vergleich miteinander.

7. Das Verfahren gemäß einem der vorigen Ansprüche, wobei das Vergleichen der Mehrzahl von Repräsentationen (R1, R2) umfasst:
Ermitteln (610, 620) einer Mehrzahl von Abweichungen (MSE1, MSE2), insbesondere einer Mehrzahl von mittleren quadratischen Abweichungen, in Abhängigkeit von der jeweiligen Repräsentation (R1, R2) und von einer jeweiligen zugeordneten vorab bekannten Referenz-Repräsentation (REF1, REF2);
Ermitteln (630) einer Verknüpfung (V) in Abhängigkeit von der Mehrzahl von Abweichungen (MSE1, MSE2); und
Ermitteln (640) des Zustandes (Z) des Ventils in Abhängigkeit von einem Vergleich der Verknüpfung (V) mit wenigstens einem vorab bekannten Wertebereich (W) .

8. Das Verfahren gemäß dem Anspruch 7, wobei die vorab bekannte Mehrzahl von Referenz-Repräsentationen (REF1, REF2) einen verschleiß- und fehlerfreien Zustand eines Ventiltyps repräsentiert.

9. Das Verfahren gemäß einem der vorigen Ansprüche umfassend:
Ermitteln (714) einer Analysekonfiguration (AK),
insbesondere umfassend die Mehrzahl von Durchlassbereichen (PB1, PB2);
wobei die Ermittlung (110, 120) der Mehrzahl von voneinander unterschiedlichen Repräsentationen (R1, R2) und/oder die Ermittlung (140) des Zustandes (Z) unter anderem in Abhängigkeit von der ermittelten Analysekonfiguration (AK) erfolgt.

10. Das Verfahren gemäß dem Anspruch 9 umfassend:
Ermitteln (702, 704) eines Typs des Ventils in Abhängigkeit von einer über eine
Benutzerschnittstelle erhaltenen Benutzereingabe und/oder in Abhängigkeit von einem gescannten Barcode und/oder in Abhängigkeit von einer gelesenem RFID-Etikett;
wobei die Ermittlung (714) der Analysekonfiguration (AK), insbesondere der Mehrzahl von
Durchlassbereichen (PB1, PB2), in Abhängigkeit von dem Typ des Ventils erfolgt.

11. Das Verfahren gemäß dem Anspruch 9 oder 10 umfassend:
Ermitteln (712) eines Betriebszustandes zu Beginn des Öffnungs- und/oder Schließvorgangs in Abhängigkeit von dem Tonsignal (T);
wobei die Ermittlung (714) der Analysekonfiguration (AK) in Abhängigkeit von dem ermittelten Betriebszustand erfolgt.

12. Eine Vorrichtung (100; 800, 900; 1000) umfassend:
Mittel (102) zum Empfangen oder Ermitteln wenigstens eines Tonsignals (T), welches eine akustische Tonaufnahme eines Öffnungs- und/oder Schließvorgangs eines Ventils (802; 902; 1002) umfasst;
Mittel (110, 120) zum Ermitteln einer Mehrzahl von voneinander unterschiedlichen Repräsentationen (R1, R2) zumindest eines Teils von mit dem Tonsignal (T) bereitgestellten Informationen; und
Mittel (140) zum Ermitteln eines Zustands (Z) aus einer Mehrzahl von Zuständen des Ventils (802; 902; 1002) in Abhängigkeit von der Mehrzahl von Repräsentationen (R1, R2).

13. Die Vorrichtung gemäß dem Anspruch 12, welche zur Ausführung des Verfahrens gemäß den Ansprüchen 2 bis 11 ausgebildet ist.

14. Ein System zur Ermittlung eines Zustands (Z) eines Ventils (802, 904, 1002), wobei das System umfasst:
das Ventil (802, 904, 1002); und
die Vorrichtung (100, 800, 900, 1000) gemäß einem der Ansprüche 12 bis 13.
